# FASCICULE DE BREVET EUROPEEN

(11) **EP 3 901 491 B1**
(45) Date de publication et mention de la délivrance du brevet: **31.05.2023**
(21) Numéro de dépôt: 21168120.0
(22) Date de dépôt: 13.04.2021
(51) Int. Cl.: F16H 57/04

(54) **GOULOTTE DE LUBRIFICATION GRAVITAIRE A RETENTION DE PARTICULES**
KANAL FÜR DIE SCHWERKRAFTSCHMIERUNG MIT PARTIKELRÜCKHALTUNG
GRAVITY LUBRICATION CHUTE WITH PARTICLE RETENTION

(30) Priorité: 24.04.2020 FR 2004108
(43) Date de publication de la demande: 27.10.2021
(73) Titulaire: Renault s.a.s, 92100 Boulogne Billancourt (FR)
(72) Inventeur: RIESENMEY, Fabrice, 91780 CHALO SAINT MARS (FR); BORIN, Emmanuel, 91820 Vayres sur Essonne (FR)
(74) Mandataire: Renault Group

(56) Documents cités:
- EP-A1- 2 199 645
- WO-A1-2014/155453
- JP-A- H09 210 185

## Description

La présente invention se rapporte à la lubrification des boîtes de vitesses, en particulier la lubrification des boîtes de vitesses manuelles ou automatisées, à arbres parallèles.

Plus précisément, elle a pour objet une gouttière de lubrification gravitaire de pignons et de roulements de boîte de vitesses, comprenant un plancher d'écoulement, bordé par des parois de guidage de manière à former avec celles-ci une rampe d'alimentation apte à recueillir le fluide lubrifiant projeté dans la boîte, suivie de couloirs de déversement sur des points de lubrification ciblés.

Cette invention est applicable sur tout système mécanique refroidi, ou lubrifié, par un système de goulotte d'acheminement de fluide par gravité. Plus particulièrement sur les boîtes de vitesse mécaniques, robotisées ou automatisées, et les réducteurs simples de machines électriques ou hybrides.

De tels systèmes mécaniques sont pollués par des particules de diverses matières, comme l'aluminium, le cuivre, le bronze, l'acier, la céramique, le plastique, etc., générées, au cours de la fabrication, ou du rodage, ou résultant simplement de l'usure de la boîte.

La pollution interne des boîtes de vitesses, ou des réducteurs, impacte leur fiabilité et leur prestation mécanique. En particulier, les particules métalliques et céramiques entraînées dans la boîte par le fluide de lubrification, détériorent les roulements, puis les engrenages. A terme, elles peuvent entraîner la destruction de ces composants. Les systèmes de synchronisation sont également concernés, car le bourrage des cônes de synchronisation modifie leurs coefficients de friction, avec pour résultat, une dégradation de la qualité des passages. Les particules en circulation dans la boîte, ont aussi un impact sur les systèmes de commande à glissière. Elles parviennent notamment à gripper les axes de fourchettes, en dégradant le fonctionnement des boîtes robotisées, ou automatisées.

Ces particules ont encore un impact sur les faces actives de capteurs de position ou de régime, dont elles modifient les entrefers fonctionnels, au point de dénaturer les signaux de commande des boîtes robotisées, et les faire basculer sur des modes de pilotage dégradés.

Enfin, parmi les nombreux dommages causés par les particules, il ne faut pas sous-estimer le colmatage des orifices calibrés de lubrification.

Dans un système de lubrification par flux gravitaire, on utilise parfois des aimants en ferrite, pour capter les particules magnétiques. L'emplacement de ces capteurs magnétiques est crucial, pour éviter que les particules retenues puissent être *« rincées* » par le flux de lubrifiant, et remises en circulation. Les capteurs doivent donc être placées sur un passage où le captage des particules est assuré, sans gêner pour autant l'écoulement général. Enfin, il faut prévoir une déviation des jets de lubrifiant avec l'augmentation du régime, et prendre soin que les capteurs ne se décollent pas en cours de fonctionnement.

Par la publication FR 3082 264, on connaît une goulotte de lubrification de pignons et de roulements de boîte de vitesses, avec un élément de captation magnétique intégré. Cet aimant capte à leur passage, les particules métalliques transportées par le lubrifiant au travers de la boîte. En revanche, il n'a aucun effet de retenue, sur les autres particules polluantes véhiculées par le fluide de lubrification. Une autre gouttière selon le préambule de la revendication 1 est connue de EP 2 199 645.

La présente invention vise à garantir la propreté du volume interne de la boîte de vitesses, par séparation des particules polluantes, du fluide de lubrification. L'objectif est de traiter les particules de toute nature, et de garantir leur rétention, de sorte qu'elles ne puissent pas être captées à nouveau par le flux hydraulique.

Dans ce but, elle propose que le plancher de la gouttière présente des cavités de rétention, de particules s'écoulant dans le flux de lubrifiant.

De préférence, les cavités ont une découpe sensiblement conique, de manière à former dans l'épaisseur du plancher, des cônes de rétention de particules.

Dans un mode de réalisation particulier de l'invention, le plancher est recouvert extérieurement d'une paroi magnétisée, apte à attirer dans les cavités les particules magnétiques s'écoulant dans le flux de lubrifiant.

D'autres caractéristiques et avantages de la présente invention ressortiront clairement à a lecture de la description suivante d'un mode de réalisation de celle-ci, en se reportant aux dessins annexés.
[Fig. 1] est une vue d'ensemble de la nouvelle goulotte de lubrification.
[Fig. 2A] est une coupe transversale partielle du plancher de la goulotte.
[Fig. 2B] est un agrandissement de celle-ci.
[Fig. 2C] est une vue de dessus d'une cavité de rétention de particules.

La gouttière lubrification gravitaire à rétention de particules 1 proposée, constitue un déversoir qui se dispose dans la boîte au-dessus d'une ligne de pignons, comme la goulotte de la publication FR 3082 264, à laquelle on pourra se reporter par référence. La gouttière 1 est agencée dans la boîte, de manière à récupérer la majeure partie de l'huile projetée vers le haut par la couronne du différentiel, pour la distribuer de façon ciblée en plusieurs points de lubrification stratégiques, correspondant notamment aux groupes de pignons et synchroniseurs et aux roulements, qui ont besoin d'être lubrifiés en permanence.

La gouttière 1, comprend un plancher d'écoulement 2, bordé par des parois de guidage 3, de manière à former avec celles-ci une rampe d'alimentation 4 apte à recueillir le fluide lubrifiant projeté dans la boîte, suivie de couloirs de déversement 5, sur les points de lubrification ciblés 8.

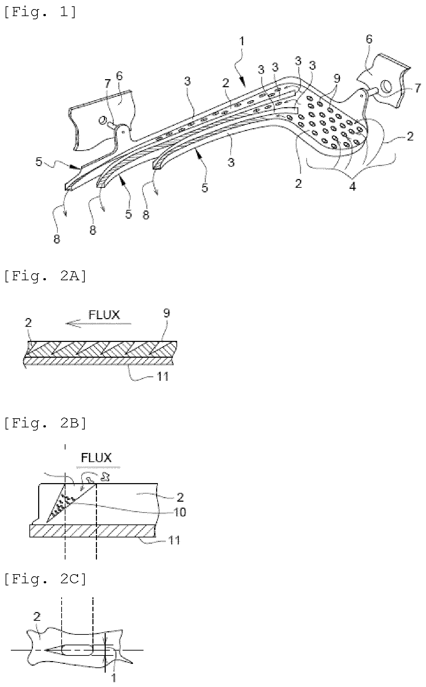

Comme montré sur la figure 1, la gouttière 1 se fixe au carter 6 de la boîte en plusieurs points par des boulons 7, ou d'autres moyens d'accrochage. La rampe d'alimentation 4, reçoit les projections d'huile de la couronne de différentiel de la boîte (non représentée sur le schéma). En aval de la rampe 4, des parois de guidage internes 3 orientent le lubrifiant qui s'écoule le long de la gouttière 1, dans plusieurs couloirs de déversement calibrés 5, dont l'extrémité asperge les différents groupes de pignons de d'une ligne de pignons.

Le plancher 2 présente des cavités de rétention 9, pour les particules 10 s'écoulant dans le flux de lubrifiant. Il est parsemé de cavités 9 sur toute sa surface. Celles-ci se retrouvent en coupe sur les figures 2A et 2B, et en vue de dessus sur la figure 2C.

Les cavités 2 ne traversent pas l'épaisseur de du plancher 2, mais constituent des réceptacles fermés pour retenir les particules. Elles ont une découpe sensiblement conique, de manière à former dans l'épaisseur du plancher, des cônes de rétention de particules. Ces cavités coniques, ou cônes 2, sont aptes à retenir les particules polluantes, véhiculées par le lubrifiant. Pour mieux les retenir, ils sont inclinés par rapport à la surface du plancher dans le sens de l'écoulement du fluide, d'environ une vingtaine de degrés (20° +/- 5°). L'ouverture des cavités à la surface du plancher, a une forme oblongue, par exemple de 1,5 mm de long sur 0,1mm de large. Leur plus grande dimension s'étend dans le sens de l'écoulement du fluide, pour faciliter la pénétration des particules 10.

Par ailleurs, le plancher 2 est recouvert extérieurement d'une paroi magnétisée 11, apte à attirer dans les cavités les particules magnétiques s'écoulant dans le flux de lubrifiant. Cette plaque, ou paroi 11, permet de retenir dans les cavités, les particules métalliques, comme les particules en acier qui circulent dans la boîte avec le lubrifiant. Lorsque d'autres particules, de nature non magnétique, s'agglomèrent autour des particules métalliques, elles sont également piégées dans les cônes de rétention, avec celles-ci, grâce à l'inclinaison des cônes. En résumé, grâce à la paroi magnétisée, et à leur inclinaison, les cônes retiennent les particules magnétiques attirées par la paroi magnétisée, ainsi que les particules non magnétiques agglomérées autour de celles-ci.

L'invention tire profit d'une pièce (la gouttière) déjà existante dans certaines boîtes de vitesses, qui a pour fonction initiale de capter un flux d'huile, de le répartir, et le diriger avec précision vers les points à lubrifier ou à refroidir. La plaque magnétique permet d'attirer dans les cônes de rétention, non seulement des particules métalliques, mais d'autres particules agglomérées autour de celle-ci. L'inclinaison des cônes dans le sens du flux d'huile, joue un rôle important pour retenir les particules piégées, métalliques ou non. A cet égard, les résultats sont excellents avec une inclinaison de l'ordre d'une vingtaine de degrés.

La plaque, ou bande magnétique, peut avoir une épaisseur de quelques dixièmes de millimètres, par exemple 0,3 mm Elle peut être rapportée sous le plancher de la gouttière, notamment par collage, ou intégrée dans le plancher de la gouttière.

Elle est de préférence collée sous le plancher, de manière à épouser sa surface et attirer magnétiquement des particules métalliques.

Le fait de magnétiser les particules d'acier permet également de retenir des matières non magnétiques, par agglomération autour de celle-ci. Lors de la conception d'une nouvelle boîte de vitesses, on sait évaluer la quantité totale de particules qui peut être générée dans la boîte au cours de son existence. Avec un grade de sévérité, cette évaluation permet de prévoir le volume cumulé utile de l'ensemble cônes de rétention. L'invention s'intègre sur une pièce déjà existante dans la boîte, sans participer à son encombrement, ni gêner la circulation de l'huile dans celle-ci. Seule la bande magnétique peut entraîner un surcoût de fabrication et d'assemblage sous le plancher, car les cônes de rétention peuvent être réalisés sans frais, lors du moulage de la gouttière.

Enfin, compte tenu du faible diamètre des orifices, la rétention de particules ne perturbe pas l'écoulement de l'huile sur la gouttière. En particulier, les phénomènes tourbillonnaires de type « *Vortex* » sont extrêmement réduits, et n'ont plus d'impact négatif.

## Revendications

1. Gouttière de lubrification gravitaire de pignons et de roulements de boîte de vitesses (1), comprenant un plancher d'écoulement (2), bordé par des parois de guidage (3) de manière à former avec celles-ci une rampe d'alimentation (4) apte à recueillir le fluide lubrifiant projeté dans la boîte, suivie de couloirs de déversement (5) sur des points de lubrification ciblés, **caractérisée en ce que** le plancher (2) présente des cavités (9) ayant une découpe de forme conique, de manière à former dans l'épaisseur du plancher (2), des cônes de rétention pour les particules (10) s'écoulant dans le flux de lubrifiant.

2. Gouttière de lubrification selon la revendication 1, **caractérisée en ce que** les cônes de rétention (9) sont inclinés par rapport à a surface du plancher (2) dans le sens de l'écoulement du fluide

3. Gouttière de lubrification selon la revendication 2, **caractérisée en ce que** les cônes de rétention (9) sont inclinés d'environ une vingtaine de degrés.

4. Gouttière de lubrification gravitaire selon la revendication Z 1 ou 2, **caractérisée en ce que** l'ouverture des cavités (9) à la surface du plancher (2), a une forme oblongue, dont la plus grande dimension s'étend dans le sens de l'écoulement du fluide.

5. Gouttière de lubrification gravitaire selon la revendication 4, **caractérisée en ce que** l'ouverture des cavités (9) à la surface du plancher (2) mesure environ 1,5 millimètres de long, sur 1 millimètre de large.

6. Gouttière de lubrification gravitaire selon l'une des revendications 1 à 3, **caractérisée en ce que** le plancher (2) est recouvert extérieurement d'une paroi magnétisée (11), apte à attirer dans les cavités (9) les particules magnétiques s'écoulant dans le flux de lubrifiant.

7. Gouttière de lubrification gravitaire selon la revendication 6, **caractérisée en ce que** les cônes de rétention (9) retiennent les particules magnétiques attirées par la paroi magnétisée (11), ainsi que les particules non magnétiques agglomérées autour de celles-ci.

8. Gouttière de lubrification gravitaire, selon la revendication 6 ou 7, **caractérisée en ce que** la paroi magnétique (11) est rapportée sous le plancher (2) de la gouttière.

9. Gouttière de lubrification gravitaire, selon la revendication 6 ou 7, **caractérisée en ce que** la paroi magnétique (11) est intégrée dans le plancher (2) de la gouttière.

## Patentansprüche

1. Rinne zur Schwerkraftschmierung von Zahnrädern und Lagern eines Getriebes (1), beinhaltend einen Strömungsboden (2), der durch Führungswände (3) begrenzt wird, um zusammen mit diesen eine Zufuhrrampe (4) zu bilden, die dazu fähig ist, das in dem Getriebe hochgeschleuderte Schmierfluid aufzufangen, gefolgt von Ableitungsgängen (5) hin zu gezielten Schmierstellen, **dadurch gekennzeichnet, dass** der Boden (2) Hohlräume (9) aufweist, die einen konischen Ausschnitt aufweisen, um in der Dicke des Bodens (2) Rückhaltekegel für die Partikel (10) zu bilden, die in dem Schmiermittelfluss strömen.

2. Rinne zur Schmierung nach Anspruch 1, **dadurch gekennzeichnet, dass** die Rückhaltekegel (9) mit Bezug auf die Oberfläche des Bodens (2) in Richtung der Strömung des Fluids geneigt sind.

3. Rinne zur Schmierung nach Anspruch 2, **dadurch gekennzeichnet, dass** die Rückhaltekegel (9) um etwa zwanzig Grad geneigt sind.

4. Rinne zur Schwerkraftschmierung nach Anspruch 1 oder 2, **dadurch gekennzeichnet, dass** die Öffnung der Hohlräume (9) an der Oberfläche des Bodens (2) eine längliche Form aufweist, deren größere Abmessung sich in Richtung der Strömung des Fluids erstreckt.

5. Rinne zur Schwerkraftschmierung nach Anspruch 4, **dadurch gekennzeichnet, dass** die Öffnung der Hohlräume (9) an der Oberfläche des Bodens (2) ungefähr 1,5 Millimeter lang und 1 Millimeter breit ist.

6. Rinne zur Schwerkraftschmierung nach einem der Ansprüche 1 bis 3, **dadurch gekennzeichnet, dass** der Boden (2) außen von einer magnetisierten Wand (11) bedeckt ist, die dazu fähig ist, die magnetischen Partikel, die in dem Schmiermittelfluss strömen, durch Anziehung in die Hohlräume (9) zu leiten.

7. Rinne zur Schwerkraftschmierung nach Anspruch 6, **dadurch gekennzeichnet, dass** die Rückhaltekegel (9) die magnetischen Partikel, die durch die magnetisierte Wand (11) angezogen werden, sowie die nicht magnetischen Partikel, die sich an diesen sammeln, zurückhalten.

8. Rinne zur Schwerkraftschmierung nach Anspruch 6 oder 7, **dadurch gekennzeichnet, dass** die magnetische Wand (11) unter dem Boden (2) der Rinne angebracht ist.

9. Rinne zur Schwerkraftschmierung nach Anspruch 6 oder 7, **dadurch gekennzeichnet, dass** die magnetische Wand (11) in den Boden (2) der Rinne integriert ist.

## Claims

1. Gravity lubrication chute for pinions and gearbox bearings (1), comprising a flow floor (2), edged by guiding walls (3) so as to form therewith a feed ramp (4) capable of collecting the lubricant sprayed into the box, followed by spill corridors (5) onto targeted lubrication points, **characterized in that** the floor (2) has cavities (9) having a cutout of conical form, so as to form, in the thickness of the floor (2), retention cones for the particles (10) flowing in the flow of lubricant.

2. Lubrication chute according to Claim 1, **characterized in that** the retention cones (9) are inclined with respect to the surface of the floor (2) in the direction of flow of the fluid.

3. Lubrication chute according to Claim 2, **characterized in that** the retention cones (9) are inclined by approximately twenty degrees.

4. Gravity lubrication chute according to Claim 1 or 2, **characterized in that** the opening of the cavities (9) on the surface of the floor (2) has an oblong form, the greatest dimension of which extends in the direction of flow of the fluid.

5. Gravity lubrication chute according to Claim 4, **characterized in that** the opening of the cavities (9) on the surface of the floor (2) measures approximately 1.5 millimetres long, to 1 millimetre wide.

6. Gravity lubrication chute according to one of Claims 1 to 3, **characterized in that** the floor (2) is covered externally by a magnetized wall (11), capable of attracting into the cavities (9) the magnetic particles flowing in the flow of lubricant.

7. Gravity lubrication chute according to Claim 6, **characterized in that** the retention cones (9) retain the magnetic particles attracted by the magnetized wall (11), as well as the non-magnetic particles agglomerated around the latter.

8. Gravity lubrication chute according to Claim 6 or 7, **characterized in that** the magnetic wall (11) is added under the floor (2) of the chute.

9. Gravity lubrication chute according to Claim 6 or 7, **characterized in that** the magnetic wall (11) is incorporated in the floor (2) of the chute.
